(19) Europäisches Patentamt
European Patent Office
Office européen des brevets

(11) Publication number: **0 075 083**
**B1**

(12) # EUROPEAN PATENT SPECIFICATION

(45) Date of publication of patent specification: **30.12.86**

(51) Int. Cl.⁴: **G 11 B 5/702**

(21) Application number: **82106246.0**

(22) Date of filing: **13.07.82**

(54) **Magnetic recording coating composition.**

(30) Priority: **21.09.81 US 304445**

(43) Date of publication of application:
**30.03.83 Bulletin 83/13**

(45) Publication of the grant of the patent:
**30.12.86 Bulletin 86/52**

(84) Designated Contracting States:
**DE FR GB**

(56) References cited:
**EP-A-0 033 900**
**DE-A-1 907 054**
**DE-B-1 234 234**
**DE-B-1 297 672**
**FR-A-1 311 588**

**The file contains technical information submitted after the application was filed and not included in this specification**

(73) Proprietor: **International Business Machines Corporation**
**Old Orchard Road**
**Armonk, N.Y. 10504 (US)**

(72) Inventor: **Blumentritt, Bruce Frederick**
**1554 11th Avenue N.E.**
**Rochester, MN 55901 (US)**
Inventor: **Shen, John Chen Syan**
**545 21st Street N.E.**
**Rochester, MN 55901 (US)**

(74) Representative: **Siccardi, Louis**
**Compagnie IBM France Département de Propriété Intellectuelle**
**F-06610 La Gaude (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical field

The invention relates to magnetic recording coating compositions and, more particularly, to a magnetic recording coating composition having finely divided magnetic particles dispersed in a thermosetting resin binder composition applied as a thin film closely adhered to a rigid non-magnetic substrate.

Background of the invention

As magnetic recording densities progressively increase and track widths correspondingly decrease magnetic bit cells are of such size that the use of hard non-magnetic particles, which have been commonly used to improve the wear resistance of disk coatings, must be minimized. Further, as new magnetic particles such as cobalt surface diffused or cobalt modified γ-$Fe_2O_3$ magnetic particles are developed to meet density requirements, high matrix curing temperatures have been found to impair the particle magnetic properties. This degradation may occur as a consequence of cobalt diffusion and reduction of magnetic properties. Also, the coating material must be capable of forming a very thin coating with a smooth surface that will allow a transducer carrying slider assembly to fly only a few thousandths of a micron above the surface. These properties are in addition to the commonly required characteristics of magnetic disk coatings such as being adaptable to normal coating techniques, capable of withstanding repeated head loadings, able to achieve high orientation ratios and capable of good abrasion resistance, impact resistance and corrosion resistance.

Summary of the invention

The magnetic recording coating composition of the invention is of the type having finely divided magnetic particles dispersed in a thermosetting resin binder composition and a non-reactive solvent, said coating composition being applied as a thin film closely adhered to a rigid non magnetic substrate, and is characterized in that said film has a thickness less than 2 microns and in that the weight of said magnetic particles is 50 to 80 percent of the total weight of said magnetic particles/resin binder components, and in that said binder comprises:

a blocked isocyanate having at least three reactive sites per chain;

a polyol having at least two reactive sites per chain and a molecular weight of 200 to 800 per hydroxy site, said polyol being selected from the group of polyester polyol, polyacrylic polyol and polyepoxy polyol; and

additive not exceeding 30 percent of the total weight of said isocyanate/polyol components.

The composition is preferably prepared by admixing fine magnetic particles, such as magnetic iron oxide, magnetic chromium dioxide, magnetic cobalt modified oxides, alloy particles or other such particulate materials commonly used in the art of producing magnetic film coatings. The particles to be embedded in the finished composition range in size from about 0.06 micron to 1.00 micron with the length to width ratios in the range of from 4/1 to about 16/1.

Additives used to enhance the properties of the coating include dispersants, catalysts and surfactants. Among the most effective dispersants is polyester polyol which has a carboxy side chain that provides a chelation effect on the magnetic particles. Also being a polyol, this additive becomes part of the cross linked polyurethane binder matrix. If this type polyester polyol is selected as the polyol, no dispersant additive is required. Since newer magnetic particles are more heat sensitive the normal polyurethane reaction or curing temperature of 190°C or less for under an hour rather than the much higher temperature and longer time required by many other coating systems is beneficial. To further enhance this characteristic, catalysts are used to speed the reaction and reduce cure temperature even further.

Use of a surfactant enables the binder to retain a greater magnetic particle concentration while forming a smooth, thin coating.

After curing and cooling, the magnetic recording surface is polished to produce a super finished surface with an arithmetic average (AA) roughness of $2.5.10^{-3}$ micron to $10.10^{-3}$ micron and a thickness of less than 2 micron. The resulting magnetic recording surface is a very smooth continuous surface without perceptible streaks, lines, craters, voids or asperities.

The coating is resistant to abrasion and shedding of the magnetic particles embedded uniformly therein. The surface finish is further highly resistant to conventional cleaning solvents during the washing operation.

The finished surface structure retains a small quantity of lubricant in minute sites that effectively lubricates the disk surface, but is neither prone to cause "stiction" or adhesion with a stationary read/write head or be spun off the disk during rotation at operational speeds.

Brief description of the drawing

The drawing figure is a flow diagram illustrating the steps in formulating the coating composition and applying the coating to a rigid substrate to form a magnetic recording disk that is finished and lubricated.

Detailed description

The present magnetic coating includes a polyurethane binder in which magnetic particles are

dispersed and which can be applied to a rigid substrate using presently used coating methods. The binder may include catalyst, surfactant and dispersant additives to enhance the properties of the binder, reactivity of the binder component materials or intermediate compounds and enable the binder to function with a high concentration of magnetic particles.

In a rigid disk coating application, it is desirable to have an ink or coating material which is stable at room temperature, but that reacts at elevated temperatures to form a thermosetting coating. To achieve that condition, the present urethane coating systems are obtained using the socalled "blocked" isocyanates or "splitters". The products have also been referred to as "disguised" and "capped" isocyanates. These blocked isocyanates are reaction products of isocyanates with certain active hydrogen compounds such that the addition product has only limited thermal stability. A typical example is the urethane from a methyl-ethyl ketone Oxime:

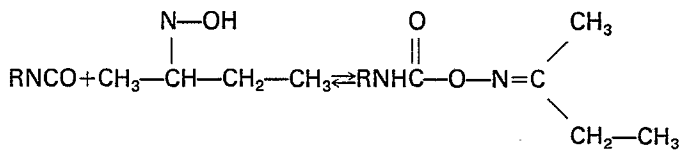

wherein R is an aromatic, aliphatic or a combination aromatic/aliphatic hydrocarbon chain.

The blocked isocyanate, as shown at the right side of the equation may dissociate at temperatures above 121°C regenerating the isocyanate as indicated to the left of the equation. Thus, a polyisocyanate can be reacted with oxime to give a urethane that is stable at room temperature.

This blocked isocyanate could be dissolved in polyester polyol, acrylic polyol, or epoxy polyol to give a mixture with indefinite storage life at room temperature. Upon heating to 150—204°C, however, the urethane is "deblocked", regenerating the polyisocyanate, which would then react with the polyols to give a polyurethane.

The deblocking temperature is dependent on the blocking agent and type of isocyanate. For example, a curing temperature of 300°F is frequently used in curing polyesters with polyisocyanates blocked with phenol or methyl-ethyl ketone Oxime. The lowest cure temperature of 121°C may be achieved when HCN is used. Blocking compounds used in preparing the blocked isocyanate included phenol, m-cresol, diethyl malonate, ethyl acetoacetate, ethyl cyanoacetate, and caprolactam.

The polyisocyanate compounds used in the binder of the present invention have a molecular weight of 150 to 500 per NCO group. Also the isocyanate has at least three reactive sites, NCO groups, per chain so that cross linking and thermosetting properties are established in the resulting polyurethane binder.

The polyol compounds which are most readily used to form the binder are polyester, polyacrylic and polyepoxy. These are hydroxy terminated or branched compounds which react with the isocyanate to form the highly cross linked thermosetting polyurethane binder. Although epoxy is not a true polyol, it forms part of the group since through reaction between the secondary hydroxy branch sites, such as in a bisphenol-A epoxy and the isocyanate NCO reactive sites, the resulting compound provides a thermosetting polyurethane having properties identical or closely similar to those of the true polyols.

In addition, it has been found that the polyol component should have a molecular weight that is within the range of 200 to 800 per hydroxy reactive site. Longer polymer chains that exceed a molecular weight of 800 per site have proved to be too soft and polyols with polymer chains having a molecular weight of less than 200 per site have been too brittle. Also the polyol compound must have two or more reactive hydroxy sites per chain. If less than two active sites exist per chain, the resulting polyurethane is thermoplastic rather than thermosetting since the required cross linking fails to develop.

The equivalent weight value is the weight of the polyisocyanate or the polyol that contains one weight part of —NCO in the case of polyisocyanates, or one weight part of —OH in the case of polyol. The ratio of isocyanate to hydroxyl is one factor controlling the properties of a urethane coating. The physical and/or chemical effects of the NCO/OH value can be related to the type of molecular structure and the molecular weight of the coating. Theoretically, at an NCO/OH ratio of 1.0 the properties associated with molecular weight are optimized. In general, two component urethane coatings are formulated to have NCO/OH ratios in the range of 0.8 to 1.2.

The coating further contains one or more additives which operate as a catalyst, dispersant and/or a surfactant and nonreactive solvents. Catalysts are used to promote the reaction between the isocyanate and polyol to reduce both the curing temperature and curing time. Both minimum cure temperature and shortened cure time are important to limit the possible impairment of the magnetic qualities of modern magnetic particles such as cobalt modified iron which are magnetically superior to their predecessors, but more prone to degradation when exposed to prolonged elevated temperatures.

Catalysts used in this invention can be bases (tertiary amine) type catalysts, such as 2,4,6-tris (dimethylaminomethyl) phenol, commercially known as DMP 30; triethylamine, N,N-dimethylaminoethanol; 1,4-diazabicyclo (2,2,2) octane; bis (2-dimethylaminoethyl) ether amine or other tertiary amine adducts or metallic compounds, such as stannous octoate; lead octoate, potassium octoate dibutyltin dilaurate or other organo metallic compounds, as well as a combination of tertiary amines with metallic compounds.

The dispersing agent additive serves to chelate the magnetic particles such that they are individually suspended within the uncured binder to permit the maximum orientation in the desired tangential direction along the disk surface after application of the ink or coating mixture wherein the magnetic particles are suspended. It is the effectiveness of the dispersing agent in maintaining the separation of magnetic particles, which have a natural attraction for one another, that determines the shelf life of the coating mixture. Since the chemical reaction between isocyanate and polyol can easily be prevented through limiting the temperature to which the coating material is exposed, the real determinant of shelf life is the ability of the coating mixture to produce a high orientation ratio in the ultimately coated disk.

One dispersing agent, MULTRON R-221-75 (Mobay) is not only effective as a dispersant additive, but being a polyester polyol also reacts with the isocyanate to form a part of the cross linked polyurethane binder compound following the curing stage of the process. This polyester compound is an effective dispersing agent because of the carboxy group side chain which provides the chelating function. When this polyester compound is used as the polyol which is reacted with the isocyanate, it is unnecessary to provide a separate dispersing agent. Organic and inorganic compounds that contain phosphite or phosphate groups are also effective as dispersant additives. Examples are: titanate coupling agents (Kenrich Petrochemicals), commercially known as KR-112S, KR-212, KR-385, KR-55 and epoxy phosphate esters; the reaction products of epoxy resins and phospholic acid.

The surfactant provides wetting, leveling and flow-control functions through reduced surface tension that enables smooth, defect free coatings and makes possible the high concentration of magnetic particles within the binder mixture.

To achieve an optimum magnetic coating it is necessary that the magnetic particles achieve a micro scale type dispersion within the binder. Ideally, each particle should be so dispersed as to be independently retained within the binder.

This would enable maximum orientation of the particles in the desired direction. Use of the MULTRON R221 polyester disperser identified above provides a super dispersion that can be maintained for at least 6 to 8 weeks and is effective to maintain dispersion through the coating process. Though there are several other coating techniques such as spray coating and roll coating it is probably most common to spin coat the disk substrate. The particles must maintain both the dispersion and a uniform distribution of particles within the coating from the inner to outer coated area. That is, there must be no centrifugal action that separates binder and particles to increase the particle density in the outer area of the disk. In addition the binder must provide sufficient freedom and mobility to the particles to permit orientation from a radial position imparted during the spin coating to the desired tangential position in the finished disk. Also, after the particles have been oriented by a magnetic field, the binder must restrict mobility until the particles are immobilized in the cross linked matrix by the curing step.

Several types of volatile, nonreactive solvents can be used in the production of the present composition to reduce the solids content and enable very thin coatings to be applied to the substrate. Examples of various classes of solvents which may be added to the resins and the particulate dispersions are: aromatic solvents—Toluene, xylene, ethyl benzene; Ketones—methyl ethyl ketone, isophorone, methyl amyl ketone, ethyl amyl ketone, methyl isobutyl ketone; and acetate—ethyl acetate, cellosolve acetate carbitol acetate, butyl acetate, butyl cellosolve acetate.

The preferred solvents employed in the composition are 60 parts by weight isophorone, 20 parts xylene and 20 parts methyl amyl ketone. It should be noted that the above exemplary list is not exclusive and that other nonreactive solvents may be employed.

Using the coating of this invention it is possible to cure the coated and oriented disk by applying a 177°C temperature for 45 minutes rather than a much longer time and higher temperature used with prior coatings.

Following the curing of the coated disk, the coating must be tolerant of the subsequent process steps of buffing, washing and lubrication. The coating must permit buffing to a smooth surface without having particles torn from the surface. Washing may be done using water detergents or solvents such as isopropyl alcohol. Finally, the surface must adequately retain lubricant to facilitate start-stop action between the coating surface and a cooperating read/write head.

Using the coating described above the solvent evaporates prior to the chemical reaction with the reaction and deblocking occurring simultaneously. The surfactant allows the gas bubbles which are initially entrapped and which subsequently escape to form a structure which retains lubricant that is not spun away during disk use.

The following are typical examples of the coatings of the present invention wherein the principal coating components and the additives have the weight portions indicated exclusive of associated solvents. The solvent content shown, unless otherwise indicated is the composite solvent concentration including that present in association with the polyisocyanate and polyol components. Examples 1 and 2 show the isocyanate in combination with an epoxy and differing dispersants while Examples 3 and 4 illustrate binder compositions employing different types of polyols.

Using a bisphenol-A epoxy, the formation of an oxazolidon ring gives a coating with flexibility and high temperature resistance, but requires high temperature baking (above 232°C) with a special catalyst. The coatings of the present invention are formed by reacting isocyanate with secondary hydroxy. The higher the molecular weight of the epoxy resin, the more hydroxy sites and the harder the resulting coating.

Example 1

| | Parts by weight |
|---|---|
| 42% Ketoxime-blocked aromatic/aliphatic polyisocyanate/isocyanurate copolymer Mondur HCB (Mobay) in 70/30 ethylglycol acetate/xylene solvent | 60.7 |
| 50% Bisphenol-A epoxy resin DER 667 (Dow) in 60/20/20 isophorone/xylene/methyl amyl ketone solvent | 64.9 |
| Unsaturated polycarboxylic acid dispersant BYK P 104S (Mallinckrodt) | 0.6 |
| Fluorocarbon surfactant FC-430 (3M) | 0.1 |
| Organo metal catalyst Stannous octoate T-9 (M & T Chem) | 0.3 |
| Magnetic cobalt modified iron oxide particles (Pfizer EX 2560) | 100 |
| Isophorone solvent | 95 |
| Xylene solvent | 14.2 |
| Methyl amyl ketone solvent | 14.2 |

Referring to the figure, the coating composition of Example 1 is prepared as follows:

1. The magnetic particle dispersion is first prepared by adding 100 parts of cobalt doped magnetic iron oxide particles to 0.6 parts dispersant and a portion of the solvent including 57 parts isophorone, 14.2 parts Xylene and 14.2 parts methyl amyl ketone. This mixture is stirred for a period of 1 to 2 hours. The entire mixture is milled using conventional milling techniques such as ball mill or media mill until free of agglomerates.

2. Thereafter, 64.9 parts of 50% DER 667 mixed with 60.7 parts of 42% Mondur HCB in 19 parts isophorone solvent; added to the mixture of step 1 above and milled.

3. The 0.3 parts catalyst and 0.1 parts surfactant with 19 parts isophorone solvent are added to adjust the final viscosity of the total mixture to approximately 40 cps at 25°C as measured by a Ferranti-Shirley viscosimeter. After adjusting ink viscosity, the mixture is put through a 2 to 8 micrometer absolute filter to remove any possible debris or contaminants.

The compositions of Examples 2, 3 and 4 are prepared in a similar fashion.

Example 2

| | Parts by weight |
|---|---|
| Ketoxime blocked polyisocyanate Mondur HCB (Mobay) | 42.8 |
| Bisphenol-A epoxy resin Epon 1007 (Shell) | 47.5 |
| Polyester polyol Multron R-221 (Mobay) | 8.1 |
| Titanate coupling agent KR-385 (Kenrich) | 1.6 |
| Fluorocarbon surfactant FC 430 (3M) | 0.15 |
| Organo metal catalyst Stannous octoate T-9 (M & T Chem) | 0.5 |
| Magnetic particles | 180 |
| Solvent Isophorone/xylene/methyl amyl ketone 60:20:20 | 420 |

The use of polyester systems in urethane coatings involves some trade offs due to limited high functionality of available polyester resins. Unlike epoxy and acrylic resins, the hydroxyl polyesters are terminated at the chain end. The increased weight of polyester resins results in an improvement in coatability and particle dispersability, but decreases coating hardness.

To improve the hardness of this type of coating, it is necessary to incorporate a high functionality, rigid polymer segments such as styrene-allyl alcohol of which RJ101 (Monsanto) is an example. Coating hardness is needed, not only for the wear properties of withstanding repeated head loadings, but also for buffing and washing processes.

Example 3

| | Parts by weight |
|---|---|
| Ketoxime blocked polyisocyanate<br>Mondur HCB (Mobay) | 35.8 |
| Polyester polyol<br>Multron R-221 (Mobay) | 20 |
| Polyacrylic polyol<br>RJ101 (Monsanto) | 20 |
| Fluorocarbon surfactant<br>FC 430 (3M) | 0.3 |
| Organo metal catalyst<br>Stannous octoate T-9 (M & T Chem) | 0.6 |
| Magnetic particles | 100 |
| Nonreactant solvent | 128.31 |
| Isophorone/xylene/methyl amyl ketone | 60:20:20 |
| Isophorone | 24.45 |

The thermosetting acrylics exist in both the acid and hydroxy types. The hydroxy material is of interest in the formulation of the present urethane-acrylic coatings. Unlike polyester, hydroxy acrylic has a reactive site at the side chain.

Example 4

| | Parts by weight |
|---|---|
| Ketoxime blocked polyisocyanate<br>Mondur HCB (Mobay) | 61 |
| Polyacrylic polyol<br>AT 400 (Rohm & Haas) | 132 |
| Polyester polyol dispersant<br>Multron R-221 (Mobay) | 6.1 |
| Fluorocarbon surfactant<br>FC 430 (3M) | 0.1 |
| Organo metal catalyst<br>Stannous octoate T-9 (M & T Chem) | 1.0 |
| Magnetic particles | 300 |
| Solvent | 400 |
| Isophorone/xylene/methyl/amyl ketone | 60:20:20 |

The coating composition prepared according to the teaching of the invention is applied to an aluminum disk substrate using conventional spin coating techniques. The magnetizable particles are then oriented circumferentially of the disk surface using the well established magnetic field orientation practice following which the coating is cured at an elevated temperature of about 177°C for approximately 45

minutes. After cooling, the disk is polished to produce a super finished surface with an arithmetic average roughness of $2.5.10^{-3}$ micron to $10.10^{-3}$ micron. The polished disk is then washed using deionized (DI) water and isopropyl alcohol to remove any buffing debris and the finished disk surface is lubricated using a fluorocarbon type lubricant prior to magnetic test.

On a disk thus prepared, an 8 MHz (megahertz) signal was recorded using a magnesium ferrite head with a 55 mA recording current and a 3200 rpm rotational speed. The reproduction output was 600 microvolt at the outer periphery and 500 microvolt at the inner periphery.

**Claims**

1. A magnetic recording coating composition having finely divided magnetic particles dispersed in a thermosetting resin binder composition and a non-reactive solvent, said coating composition being applied as a thin film closely adhered to a rigid non-magnetic substrate, characterized in that said film has a thickness less than 2 microns and in that the weight of said magnetic particles is 50 to 80 percent of the total weight of said magnetic particles/resin binder components, and in that said binder comprises:

a blocked isocyanate having at least three reactive sites per chain;

a polyol having at least two reactive sites per chain and a molecular weight of 200 to 800 per hydroxy site, said polyol being selected from the group of polyester, polyacrylic polyol and polyepoxy polyol; and

additives not exceeding 30 percent of the total weight of said isocyanate/polyol components.

2. The magnetic recording coating composition of claim 1, wherein said blocked isocyanate and said polyol constitute a composite which is 100 parts by weight of said binder, the weight portions of isocyanate and polyol components being such that the equivalent weight ratio of NCO/OH is between 0.8 and 1.2.

3. The magnetic recording coating composition of claim 1 or 2 wherein said additives include an organometal catalyst and a surfactant.

4. The magnetic recording coating composition of claim 3 where said additives further include a dispersing agent.

5. The magnetic recording coating composition of claim 4 wherein said dispersing agent comprises a carboxy type polyester polyol containing a carboxy group side chain.

6. The magnetic recording coating composition of claim 4 wherein said dispersing agent includes organo phosphate ester or inorgano phosphate ester compounds.

7. The magnetic recording coating composition of claim 4 wherein said dispersing agent includes titanate coupling agents.

8. The magnetic recording coating composition of claim 1 wherein said blocked isocyanate has a molecular weight of 150 to 600 per NCO site..

9. The magnetic recording coating composition of claim 8 wherein said blocked isocyanate is one of an aromatic, an aliphatic or a combination aromatic and aliphatic.

10. The magnetic recording coating composition of claim 9 wherein said blocked isocyanate also includes a trimerized polyisocyanate adduct.

11. The magnetic recording coating composition of claim 1 or 2 wherein said finely divided particles comprise cobalt modified iron oxide particles.

12. The magnetic recording coating composition of claim 11 in which the weight of said non-reactive solvent is equal to 30 to 60 percent of the weight of the total components.

13. The magnetic recording composition coating of claim 12 wherein said nonreactive solvent comprises an organo solvent compound that does not contain an active hydrogen site.

14. The magnetic recording medium of claim 1 wherein said polyol comprises a bisphenol-A epoxy containing a hydroxy group in one of the side and end chains.

**Patentansprüche**

1. Magnetische Registrierbelagsverbindung mit fein verteilten magnetischen Teilchen, die in einem warm aushärtbaren Harzbindemittel und einem nicht reaktiven Lösemittel dispergiert sind, wobei die genannte Belagsverbindung als dünner Film fest auf ein steifes, nicht magnetisches Substrat aufgebracht wird, das dadurch gekennzeichnet ist, dass die Dicke des genannten Films unter 2 Mikron liegt, dass das Gewicht der genannten Teilchen 50 bis 80 Prozent des Gesamtgewichtes der Verbindung magnetische Teilchen/Harzbindemittel erreicht und dass das genannte Bindemittel folgendes aufweist:

ein versiegeltes Isocyanat mit mindestens drei reaktiven Punkten pro Kette;

ein Polyol mit mindestens zwei reaktiven Punkten pro Kette und einem Molekulargewicht von 200 bis 800 pro Hydroxypunkt, wobei das genannte Polyol aus der Polyester-, Polyakrylpolyol- und Polyepoxypolyolgruppe ausgewählt wird, und

Additive, die 30 Prozent des Gesamtgewichtes der genannten Isocyanat-/Polyol-Komponenten nicht überschreiten.

2. Magnetische Registrierbelagsverbindung nach Anspruch 1, bei der das genannte versiegelte Isocyanat und das genannte Polyol eine Komposition bilden, die 100 Gewichtsteilen des genannten Bindemittels entspricht, und die Gewichtsanteile der Isocyanat- und Polyol-Verbindung derart bemessen sind, dass das äquivalente Gewichtsverhältnis von NCO zu OH zwischen 0,8 und 1,2 liegt.

3. Magnetische Registrierbelagsverbindung nach Anspruch 1 oder 2, bei der die genannten Additive einen Organometallkatalysatoren und einen grenzflächenaktiven Stoff umfassen.

4. Magnetische Registrierbelagsverbindung nach Anspruch 3, bei der die genannten Additive weiter ein Dispergierungsmittel aufweisen.

5. Magnetische Registrierbelagsverbindung nach Anspruch 4, bei der das genannte Dispergierungsmittel ein Polyesterpolyol vom Carboxytyp mit einer Seitenkette der Carboxygruppe aufweist.

6. Magnetische Registrierbelagsverbindung nach Anspruch 4, bei der das genannte Dispergierungsmittel organische oder anorganische Phosphatester aufweist.

7. Magnetische Registrierbelagsverbindung nach Anspruch 4, bei der das genannte Dispergierungsmittel Titanhaftvermittler aufweist.

8. Magnetische Registrierbelagsverbindung nach Anspruch 1, bei der das genannte versiegelte Isocyanat ein Molekulargewicht von 150 bis 600 pro NCO-Punkt aufweist.

9. Magnetische Registrierbelagsverbindung nach Anspruch 8, bei der das genannte versiegelte Isocyanat aromatischer, aliphatischer oder aromatisch-aliphatischer Natur ist.

10. Magnetische Registrierbelagsverbindung nach Anspruch 9, bei der das genannte versiegelte Isocyanat weiter ein trimerisiertes Polyisocyanat-addukt aufweist.

11. Magnetische Registrierbelagsverbindung nach Anspruch 1 oder 2, bei der die genannten fein verteilten Teilchen kobaltmodifizerte Eisenoxidteilchen aufweisen.

12. Magnetische Registrierbelagsverbindung nach Anspruch 11, bei der das Gewicht des genannten nicht reaktiven Lösemittels 30 oder 60 Prozent des Gesamtgewichtes aller Komponenten entspricht.

13. Magnetische Registrierbelagsverbindung nach Anspruch 12, bei der das nicht reaktive Lösemittel ein organisches Lösemittel beinhaltet, das keinen aktiven Wasserstoffpunkt aufweist.

14. Magnetische Registrierbelagsverbindung nach Anspruch 1, bei der das genannte Polyol ein Bisphenol-A-Epoxyd aufweist, das eine Hydroxygruppe in einer der Seiten- und Endketten aufweist.

**Revendications**

1. Composition de revêtement pour enregistrement magnétique comportant de fines particules magnétiques dispersées dans une composition de liant à base de résine thermodurcissable et un solvant non-réactif, ladite composition de revêtement étant appliquée sous forme de film mince sur un substrat rigide non-magnétique auquel il adhère fermement, caractérisée en ce que ledit film a une épaisseur inférieure à 2 microns et en ce que le poids desdites particules magnétiques est de 50 à 80 pour cent du poids total combiné desdites particules magnétiques et dudit liant, et en ce que ce dernier comprend:

un isocyanate bloqué possédant au moins trois sites réactifs par chaîne,

un polyol ayant un moins deux sites réactifs par chaîne et un poids moléculaire de 200 à 800 par site hydroxy, et choisi dans le groupe constitué par le polyester, le polyol polyacrylique et le polyol polyépoxyde,

des additifs ne dépassant pas 30 pour cent du poids total combiné dudit isocyanate et dudit polyol.

2. Composition de revêtement pour enregistrement magnétique selon la revendication 1, caractérisée en ce que ledit isocyanate bloqué et ledit polyol constituent un ensemble correspondant à 100 parties en poids dudit liant, les poids respectifs dudit isocyanate et dudit polyol étant tels que le rapport des poids équivalents de NCO/OH soit compris entre 0,8 et 1,2.

3. Composition de revêtement pour enregistrement magnétique selon la revendication 1 ou 2, caractérisée en ce que lesdits additifs comprennent un catalyseur organométallique et un agent tensioactif.

4. Composition de revêtement pour enregistrement magnétique selon la revendication 3, caractérisée en ce que lesdits additifs comprennent en outre un agent de dispersion.

5. Composition de revêtement pour enregistrement magnétique selon la revendication 4, caractérisée en ce que ledit agent de dispersion comprend un polyester polyol du type carboxy contenant une chaîne latérale du groupe carboxy.

6. Composition de révêtement pour enregistrement magnétique selon la revendication 4, caractérisée en ce que ledit agent de dispersion comprend un ester de phosphate organique ou inorganique.

7. Composition de revêtement pour enregistrement magnétique selon la revendication 4, caractérisée en ce que ledit agent de dispersion comprend des agents de copulation au titanate.

8. Composition de revêtement pour enregistrement magnétique selon la revendication 1, caractérisée en ce que ledit isocyanate bloqué a un poids moléculaire de 150 à 600 par site de NCO.

9. Composition de revêtement pour enregistrement magnétique selon la revendication 8, caractérisée en ce que ledit isocyanate bloqué est aromatique ou aliphatique ou aromatique/aliphatique.

10. Composition de revêtement pour enregistrement magnétique selon la revendication 9, caractérisé en ce que ledit isocyanate bloqué comprend également un produit d'addition constitué par du polyisocyanate trimérisé.

11. Composition de revêtement pour enregistrement magnétique selon la revendication 1 ou 2, caractérisée en ce que lesdites particules fines sont des particules d'oxyde de fer modifié au cobalt.

12. Composition de revêtement pour enregistrement magnétique selon la revendication 11, caractérisée en ce que le poids dudit solvant non réactif est égal à 30 à 60 pour cent du poids total des composants.

13. Composition de revêtement pour enregistrement magnétique selon la revendication 12, caractérisée en ce que ledit solvant non réactif est un solvant organique ne contenant pas de site d'hydrogène actif.

14. Composition de revêtement pour enregistrement magnétique selon la revendication 1, caractérisé en ce que ledit polyol comporte un époxide bisphénol-A contenant un groupe hydroxy dans l'une des chaînes latérales et finales.

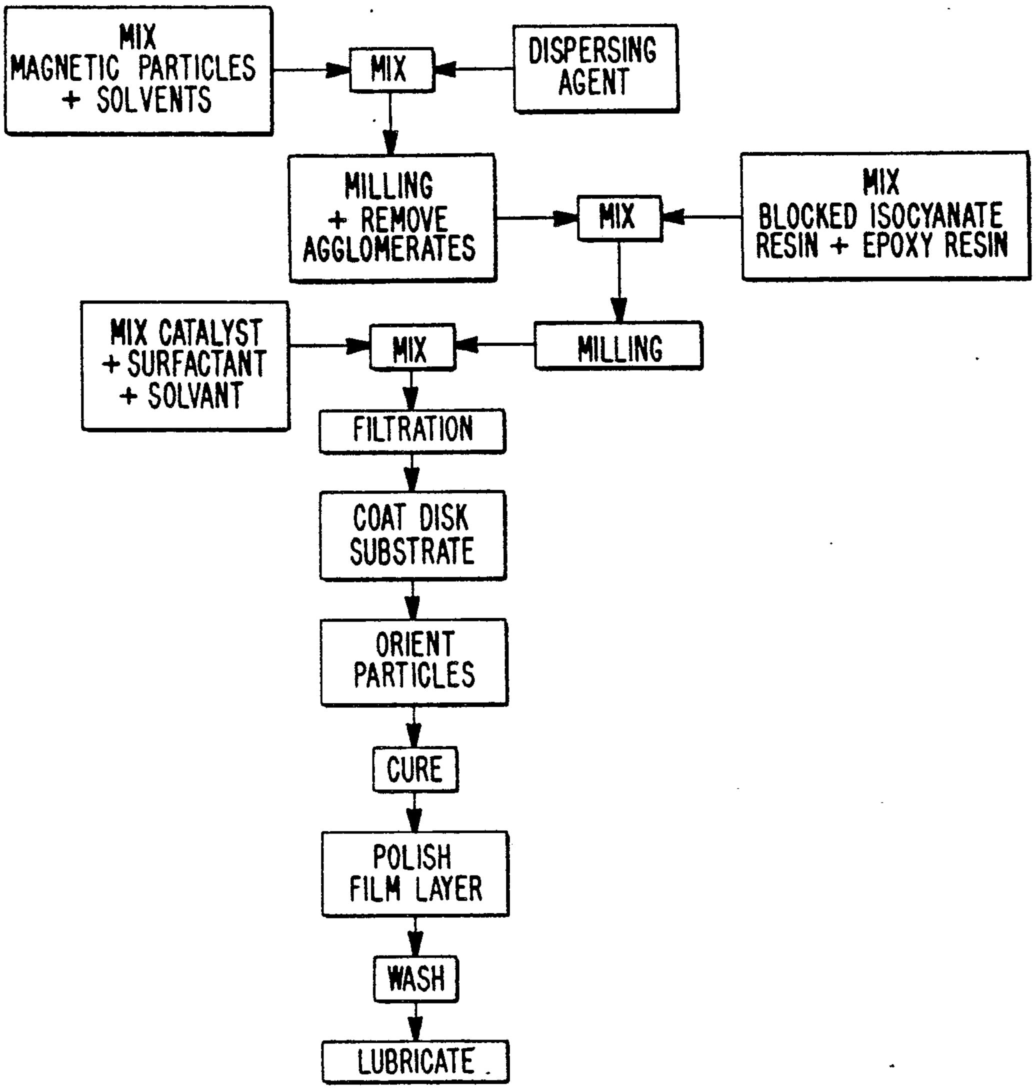
MIX
MAGNETIC PARTICLES
+ SOLVENTS
MIX
DISPERSING
AGENT
MILLING
+ REMOVE
AGGLOMERATES
MIX
MIX
BLOCKED ISOCYANATE
RESIN + EPOXY RESIN
MIX CATALYST
+ SURFACTANT
+ SOLVANT
MIX
MILLING
FILTRATION
COAT DISK
SUBSTRATE
ORIENT
PARTICLES
CURE
POLISH
FILM LAYER
WASH
LUBRICATE